(19) Europäisches Patentamt / European Patent Office / Office européen des brevets

(11) **EP 3 923 240 A2**

(12) **EUROPEAN PATENT APPLICATION**

(43) Date of publication:
**15.12.2021 Bulletin 2021/50**

(51) Int Cl.:
**G06T 7/62** *(2017.01)*     **G06T 7/66** *(2017.01)*
**G06T 7/70** *(2017.01)*     **G06T 7/80** *(2017.01)*

(21) Application number: **21165877.8**

(22) Date of filing: **30.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.06.2020   JP 2020100785**

(71) Applicant: **FUJITSU LIMITED**
**Kanagawa 211-8588 (JP)**

(72) Inventor: **Hidaka, Hiroshi**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **CALCULATION METHOD, CALCULATION PROGRAM, AND INFORMATION PROCESSING APPARATUS**

(57)     A calculation method includes acquiring point groups of a target at each time point, executing, for each time point, a process of, based on a first point group and a second point group, calculating a distance value indicating a distance between a center of the first point group and a center of the second point group, and calculating an error value that indicating a degree of deviation between a surface of a sphere and the first point group and the second point group, specifying an exclusion target point group indicating a point group to be excluded, from the point groups of the target for each time point, based on the distance value and the error value, and calculating information indicating a positional relationship between a plurality of sensors by using a target point group which have obtained by excluding the first exclusion target point group from the point groups.

FIG. 1

## Description

[Technical Field]

The embodiment discussed herein is related to a calculation method and the like.

[Background Art]

There is a technique in the related art for measuring a three-dimensional point group of a subject using a distance measuring device such as a laser sensor. In the following description, the distance measuring device such as the laser sensor is referred to as a "sensor". For example, it is possible to three-dimensionally reproduce a subject by sensing the subject from each direction using a plurality of sensors arranged around the subject and integrating three-dimensional point groups as measurement results of the sensors.

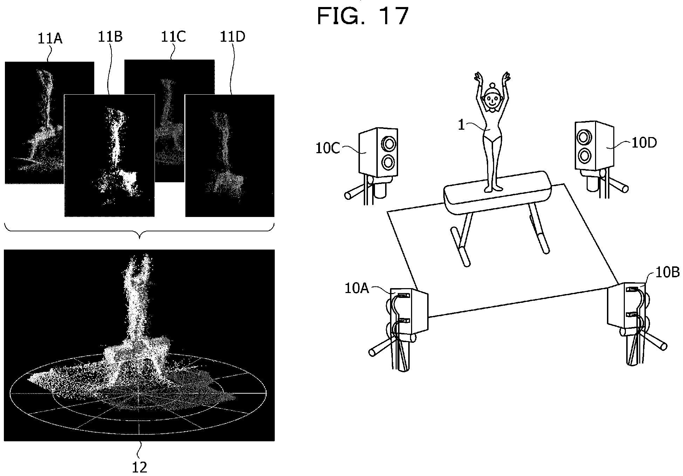

FIG. 17 is a diagram illustrating a result obtained by integrating three-dimensional point groups measured by a plurality of sensors. In the example illustrated in FIG. 17, sensors 10A, 10B, 10C, and 10D are arranged around (in front of and behind) a subject 1. The sensors 10A to 10D measure the subject 1 and obtain three-dimensional point groups.

A three-dimensional point group 11A is data based on the measurement result of the sensor 10A. A three-dimensional point group 11B is data based on the measurement result of the sensor 10B. A three-dimensional point group 11C is data based on the measurement result of the sensor 10C. A three-dimensional point group 11D is data based on the measurement result of the sensor 10D. A three-dimensional point group 12 is generated by integrating the three-dimensional point groups 11A to 11D. The three-dimensional point group 12 is used for three-dimensionally reproducing the subject 1.

In a case where a plurality of three-dimensional point groups are integrated, an external parameter is used. The external parameter is information indicating a positional relationship between the plurality of sensors. Examples of the related art for calculating the external parameter include Related Arts 1 and 2.

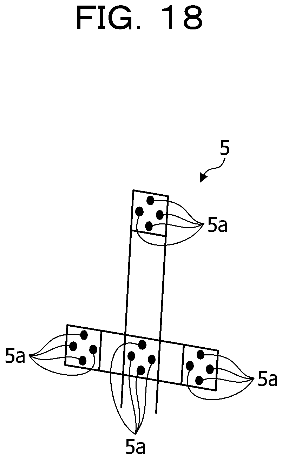

Related Art 1 will be described. Related Art 1 is an external calibration technique for calculating an external parameter of sensors using a vector marker. FIG. 18 is a diagram illustrating an example of the vector marker. A user moves a vector marker 5 to a position at which the measurement ranges of the sensors overlap each other, and calculates the external parameter so that the positions of respective marks 5a of the vector marker coincide with each other for the sensors.

In Related Art 1, the vector marker 5 is heavy. Thus, a burden on the user is large. The accuracy of the external parameter calculated by Related Art 1 is poor, which is coped with by the user manually performing fine adjustment of the external parameter after the estimation of the external parameter. There is Related Art 2 for the problem of Related Art 1.

Related Art 2 will be described. Related Art 2 is an external calibration technique for calculating an external parameter of sensors using a lightweight spherical target. In Related Art 2, a plurality of sensors observe the spherical target a plurality of times while moving one spherical target.

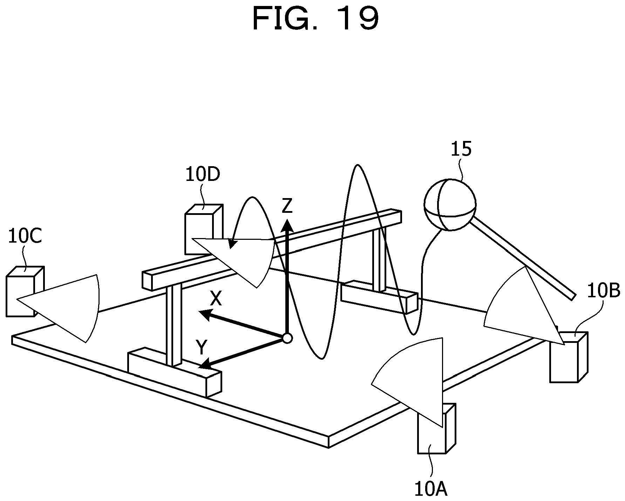

FIG. 19 is a diagram for describing Related Art 2. In the example illustrated in FIG. 19, sensors 10A, 10B, 10C, and 10D are arranged. External calibration of the sensors 10A to 10D is performed. A user moves a spherical target 15 attached to the tip of the hand-held rod in an action region.

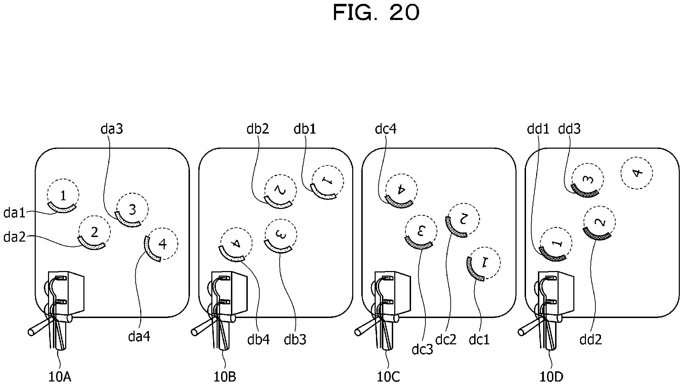

Each of the sensors 10A to 10D measures a three-dimensional point group of the spherical target 15 at regular time intervals. FIG. 20 is a diagram illustrating an example of the spherical target measured by each of the sensors. For example, distributions da1, da2, da3, and da4 are set as distributions of three-dimensional point groups obtained by the sensor 10A measuring the spherical target 15 at time points t1, t2, t3, and t4. Distributions db1, db2, db3, and db4 are set as distributions of three-dimensional point groups obtained by the sensor 10B measuring the spherical target 15 at the time points t1, t2, t3, and t4.

Distributions dc1, dc2, dc3, and dc4 are set as distributions of three-dimensional point groups obtained by the sensor 10C measuring the spherical target 15 at the time points t1, t2, t3, and t4. Distributions dd1, dd2, and dd3 are set as distributions of three-dimensional point groups obtained by the sensor 10D measuring the spherical target 15 at the time points t1, t2, and t3. It is assumed that the spherical target 15 is not included in a measurable range of the sensor 10D at the time point t4.

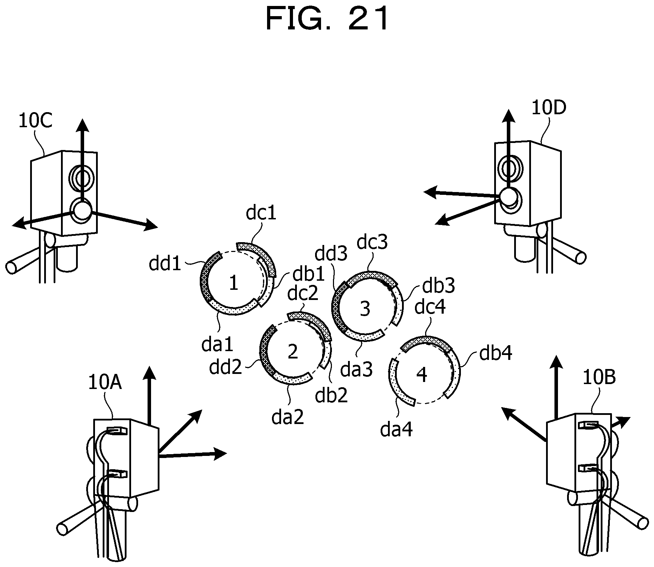

In Related Art 2, an external parameter is calculated by capturing the center of the spherical target 15 measured by the sensors 10A to 10D at each time point and matching the center between the sensors 10A to 10D. FIG. 21 is a diagram for describing matching according to Related Art 2. As illustrated in FIG. 21, in Related Art 2, a "t1 distribution" obtained by combining the distributions da1, db1, dc1, and dd1 at the time point t1 and a "t2 distribution" obtained by combining the distributions da2, db2, dc2, and dd2 at the time point t2 are generated. In Related Art 2, a "t3 distribution" obtained by combining the distributions da3, db3, dc3, and dd3 at the time point t3 and a "t4 distribution" obtained by combining the distributions da4, db4, and dc4 at the time point t4 are generated.

In Related Art 2, the external calibration is performed in a manner that the external parameters of the sensors 10A to 10D are adjusted so that the shapes of the t1 distribution to the t4 distribution are close to the shape of the spherical target 15.

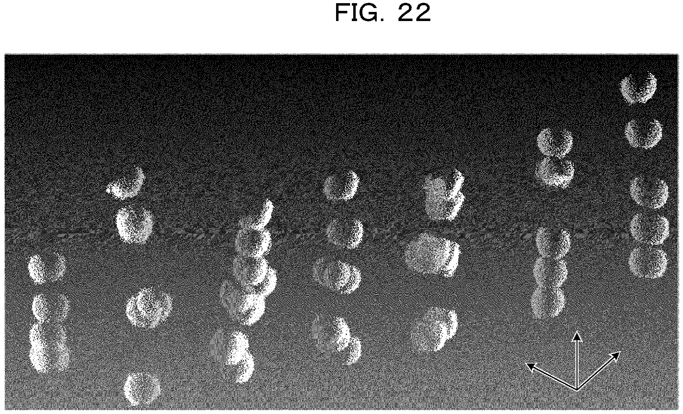

FIG. 22 is a diagram illustrating a result obtained by performing the external calibration. In FIG. 22, as an example, the external calibration is performed on six sensors, and a sphere is represented by combining distributions of three-dimensional point groups measured by the individual sensors at regular time intervals. In FIG. 22, the sphere is represented in a standard coordinate system.

[Citation List]

[Patent Literature]

[PTL 1] Japanese Laid-open Patent Publication No. 2019-086476

[Non Patent Literature]

[NPL 1] M. Ruan, "Calibration of 3D Sensors Using a Spherical Target", 3DV 2014

[Summary of Invention]

[Technical Problem]

In Related Art 2, since it is sufficient to move the lightweight spherical target 15, the burden on the user is smaller than in a case where the vector marker 5 is moved as in Related Art 1. In Related Art 2, it is possible to calculate the external parameter with a certain degree of accuracy without manually performing fine adjustment of the external parameter as in Related Art 1.

However, if the sensing result itself of each of the sensors includes the distortion in the three-dimensional point group that depends on the sensor individual difference, the sensor characteristics, and the environment, there is a problem that the estimation accuracy of the external parameter decreases even when Related Art 2 is used.

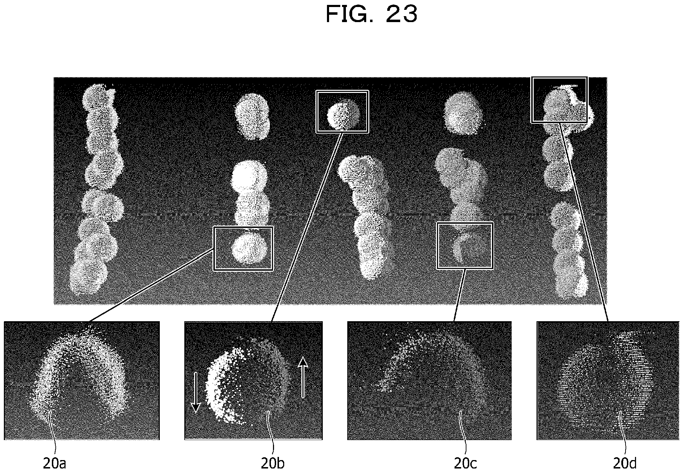

FIG. 23 is a diagram (1) for describing the problem of the related art. In FIG. 23, a sphere is represented in the standard coordinate system at regular time intervals, based on the measurement results of the sensors subjected to the external calibration.

For example, when the sensor has light reception distortion, at the end of the measurement range, distortion occurs in a target, and/or a shift in bonding occurs. In a three-dimensional point group 20a, distortion occurs in the target. In a three-dimensional point group 20b, a shift in the bonding occurs in the target.

The noise is likely to be applied to the end of a detection object by the characteristics of a light receiving element of the sensor. For example, noise occurs in a three-dimensional point group 20d.

As a case depending on the environment, data loss occurs in a case of being influenced by an obstacle or if the detection object is located at the end of the measurement range. In a three-dimensional point group 20c, missing of a point group occurs.

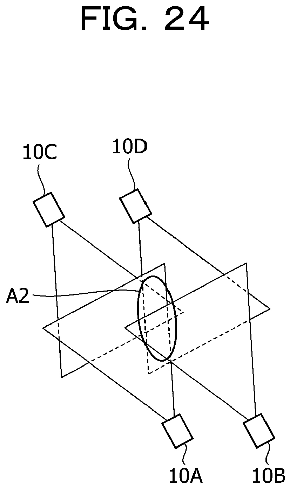

FIG. 24 is a diagram (2) for describing the problem of the related art. For example, in order to exclude the influence of noise distortion, it is considered to exclude the targets at the ends of the measurement range. In a case where sensors 10A to 10D are arranged as illustrated in FIG. 24, a region A2 is a region common to the measurement ranges of the sensors 10A to 10D. In such a case, the region A2 becomes the ends of the measurement regions of the sensors 10A to 10D. However, if a target in the region A2 is simply excluded, the number of samples decreases, and thus the estimation accuracy of the external parameter may rather decrease.

In one aspect, an object of the present disclosure is to provide a calculation method, a calculation program, and an information processing apparatus with which accuracy of estimating a positional relationship between a plurality of sensors may be improved.

[Solution to Problem]

In a first aspect, a computer executes processing as follows. The computer acquires point groups of a target for each time point, that are measured using a plurality of sensors. The computer executes, for each time point, a process of, based on a first point group and a second point group, calculating a distance value indicating a distance between a center of the first point group and a center of the second point group, and calculating an error value indicating a degree of deviation between a surface of a sphere and the first point group and the second. The first point group indicates a point group of a target, that is measured using a first sensor among the plurality of sensors. The second point group indicates a point group of the target, that is measured using a second sensor among the plurality of sensors. The computer specifies an exclusion target point group that indicates a point group to be excluded, from the point groups of the target for each time point, based on the distance value and the error value calculated for each time point. The computer calculates information that indicates a positional relationship between the plurality of sensors by using a target point group that indicates a point group obtained by excluding the exclusion target point group from the point groups of the target for each time point.

[Effects of Invention]

The accuracy of estimating the positional relationship between the plurality of sensors may be improved.

[Brief Description of Drawings]

FIG. 1 is a diagram illustrating an example of an information processing system according to an embodiment;
FIG. 2 is a diagram (1) for describing a distance value and an error value;
FIG. 3 is a diagram (2) for describing the distance value and the error value;

FIG. 4 is a diagram (3) for describing the distance value and the error value;

FIG. 5 is a diagram (4) for describing the distance value and the error value;

FIG. 6 is a diagram illustrating a relationship between the distance value and the error value in point group data at each time point;

FIG. 7 is a diagram for describing a change of the point group data used when an external parameter is updated;

FIG. 8 is a functional block diagram illustrating a configuration of an information processing apparatus according to the embodiment;

FIG. 9 is a diagram illustrating an example of a data structure of a background image table;

FIG. 10 is a diagram illustrating an example of a data structure of a detection result table;

FIG. 11 is a diagram illustrating an example of a data structure of an external parameter table;

FIG. 12 is a diagram for describing processing of an acquisition unit according to the embodiment;

FIG. 13 is a diagram for describing processing in which a calculation unit calculates an error value $e_{rms}$;

FIG. 14 is a flowchart illustrating a processing procedure of processing in which the information processing apparatus according to the embodiment performs external calibration;

FIG. 15 is a diagram illustrating an example in which processing of the information processing apparatus is applied to the point group data at each time point;

FIG. 16 is a diagram illustrating an example of a hardware configuration of a computer that implements functions similar to those of the information processing apparatus;

FIG. 17 is a diagram illustrating a result obtained by integrating three-dimensional point groups measured by a plurality of sensors;

FIG. 18 is a diagram illustrating an example of a vector marker;

FIG. 19 is a diagram for describing Related Art 2;

FIG. 20 is a diagram illustrating an example of a spherical target measured by each sensor;

FIG. 21 is a diagram for describing matching according to Related Art 2;

FIG. 22 is a diagram illustrating a result obtained by performing external calibration;

FIG. 23 is a diagram (1) for describing a problem of the related art; and

FIG. 24 is a diagram (2) for describing the problem of the related art.

[Description of Embodiments]

Hereinafter, a calculation method, a calculation program, and an information processing apparatus according to an embodiment disclosed in the present application will be described in detail with reference to the drawings. The present disclosure is not limited to the embodiment.

[Embodiment]

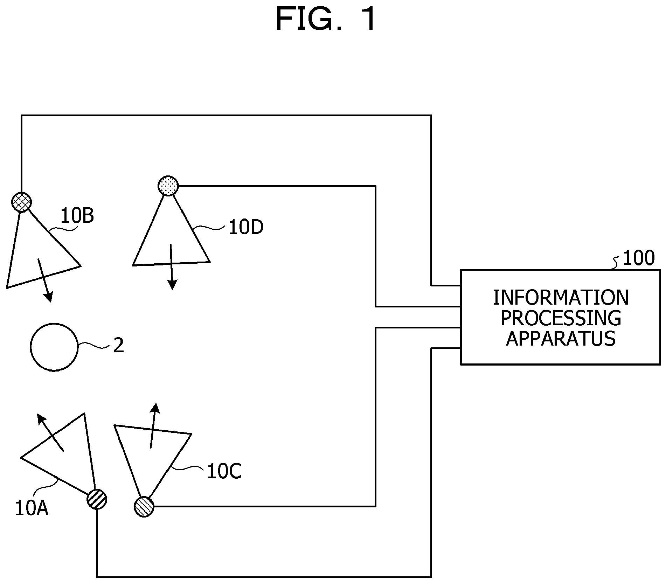

FIG. 1 is a diagram illustrating an example of an information processing system according to an embodiment. As illustrated in FIG. 1, an information processing system according to an embodiment includes sensors 10A, 10B, 10C, and 10D and an information processing apparatus 100. The sensors 10A to 10D and the information processing apparatus 100 are connected to each other in a wired or wireless manner. FIG. 1 illustrates the sensors 10A to 10D, but the information processing system may include other sensors.

The sensor 10A is a measuring device (laser sensor) that measures the distance between the sensor 10A and a point group forming a subject (or target 2). The sensor 10A outputs data of a distance image being a measurement result to the information processing apparatus 100. The data of the distance image includes information in which each pixel is associated with a distance value. The data of the distance image is converted into three-dimensional point group data by the information processing apparatus 100. The three-dimensional point group data is information in which points are associated with coordinates in a three-dimensional orthogonal coordinate system for a point group. In the following description, the three-dimensional point group data is referred to as "point group data".

The description related to the sensors 10B to 10D is similar to the description related to the sensor 10A. In the following description, the sensors 10A to 10D are collectively referred to as "sensors 10" as appropriate. The point group data is data obtained by converting the data of the distance image measured by the sensor 10, but is appropriately referred to as point group data measured by the sensor 10, and description indicating that the data of the distance image is converted into the point group data will be omitted.

The information processing system according to the embodiment is a system that measures a subject (not illustrated) by using the sensor 10 and evaluates an action performed by the subject. The information processing system performs external calibration by using the target 2 and generates an external parameter, as preprocessing. The information processing system integrates the point group data measured by the sensor 10 based on the generated external parameter, generates point group data of the entirety of the subject, and evaluates the action performed by the subject.

An example of processing in which the information processing apparatus 100 in the information processing system calculates the external parameter will be described. The information processing apparatus 100 calculates a "distance value" and an "error value" for the point group data of a target, which is measured by the sensor 10, and specifies point group data to be adopted in the external calibration, based on the calculation result. In this manner, the information processing apparatus improves the accuracy of the external parameter.

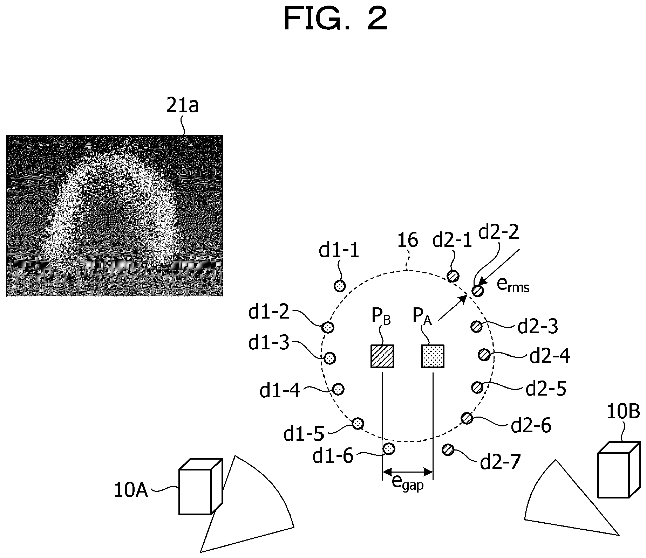

FIG. 2 is a diagram (1) for describing the distance value and the error value. In the example illustrated in FIG. 2, the point group data measured by the sensor 10A includes points d1-1 to d1-6. Point group data measured by the sensor 10B includes points d2-1 to d2-7. The points d1-1 to d1-6 and the points d2-1 to d2-7 are points obtained by simplifying a point group data 21a for explanation.

The information processing apparatus 100 performs the external calibration by using the point group data measured by the sensor 10, and calculates an initial value of the external parameter. Therefore, it is assumed that the positions of the points d1-1 to d1-6 and the positions of the points d2-1 to d2-7 are adjusted by the initial value of the external parameter.

The information processing apparatus 100 calculates a center position $P_A$ of a sphere estimated from the point group data (points d1-1 to d1-6) measured by the sensor 10A. The information processing apparatus 100 calculates a center position $P_B$ of a sphere estimated from the point group data (points d2-1 to d2-6) measured by the sensor 10B. The information processing apparatus 100 calculates a distance between the center position $P_A$ and the center position $P_B$, as a distance value $e_{gap}$.

The information processing apparatus 100 performs fitting on a real sphere 16 based on the point group data measured by the sensor 10A and the point group data measured by the sensor 10B. The information processing apparatus 100 calculates a root mean square error of distances between the point group data (points d1-1 to d1-6 and points d2-1 to d2-6) and the surface of the real sphere 16, as an error value $e_{rms}$.

In a case where the distance value $e_{gap}$ satisfies a condition R1 and the error value $e_{rms}$ satisfies a condition R2, the information processing apparatus 100 specifies the point group data (points d1-1 to d1-6 and points d2-1 to d2-6) as point group data to be used in the external calibration. In a case where the distance value $e_{gap}$ does not satisfy the condition R1 or the error value $e_{rms}$ does not satisfy the condition R2, the information processing apparatus 100 specifies the point group data (points d1-1 to d1-6 and points d2-1 to d2-6) as point group data that is not used in the external calibration. $e_{th1}$ and $e_{th2}$ are thresholds set in advance. In the following description, the point group data that is not used in the external calibration is referred to as "exclusion target point group data". The exclusion target point group data is an example of an "exclusion target point group".

Distance value $e_{gap} < e_{th1}$ ... Condition R1
Error value $e_{rms} < e_{th2}$ ... Condition R2

In a case where the distance value $e_{gap}$ does not satisfy the condition R1, or in a case where the error value $e_{rms}$ does not satisfy the condition R2, the sensing result itself of the sensor 10 has the distortion in the point group data, that depends on the sensor individual difference, the sensor characteristics, and the environment.

For example, in the case of the point group data (points d1-1 to d1-6 and points d2-1 to d2-6) illustrated in FIG. 2, the distance value $e_{gap}$ does not satisfy the condition R1, and the error value $e_{rms}$ does not satisfy the condition R2. In the point group data 21a in FIG. 2, distortion occurs in the target 2 formed by the point group data due to distortion of a light receiving lens of the sensors 10A and 10B.

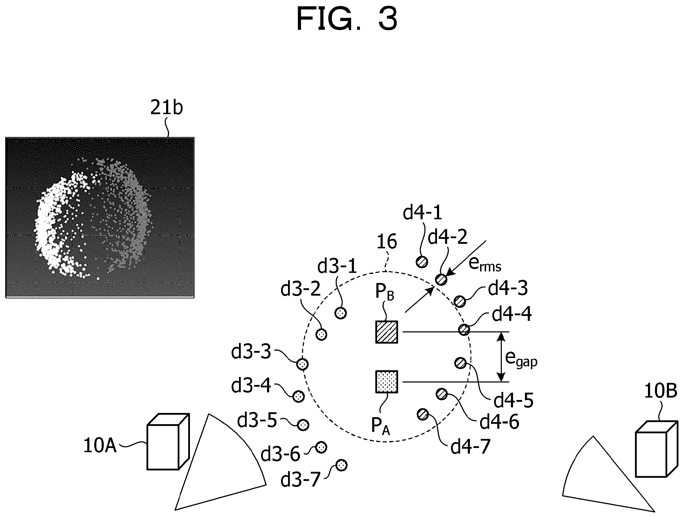

FIG. 3 is a diagram (2) for describing the distance value and the error value. In the example illustrated in FIG. 3, point group data measured by the sensor 10A includes points d3-1 to d3-7. Point group data measured by the sensor 10B includes points d4-1 to d4-7. The points d3-1 to d3-7 and the points d4-1 to d4-7 are points obtained by simplifying a point group data 21b for explanation.

The information processing apparatus 100 calculates the distance value $e_{gap}$ and the error value $e_{rms}$ based on the point group data (points d3-1 to d3-7 and points d4-1 to d4-7) in the similar manner to that in the case of FIG. 2. For example, in the case of the point group data (points d3-1 to d3-7 and points d4-1 to d4-7) illustrated in FIG. 3, the distance value $e_{gap}$ does not satisfy the condition R1, and the error value $e_{rms}$ does not satisfy the condition R2. In the point group data 21b in FIG. 3, a bonding shift occurs in the target 2 formed by the point group data due to the distortion of the light receiving lens of the sensors 10A and 10B.

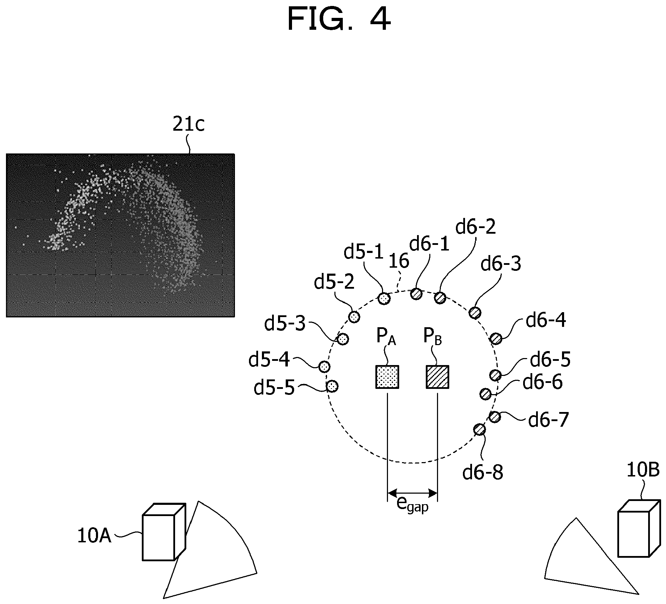

FIG. 4 is a diagram (3) for describing the distance value and the error value. In the example illustrated in FIG. 4, point group data measured by the sensor 10A includes points d5-1 to d5-5. Point group data measured by the sensor 10B includes points d6-1 to d6-8. The points d5-1 to d5-5 and the points d6-1 to d6-8 are points obtained by simplifying a point group data 21c for explanation.

The information processing apparatus 100 calculates the distance value $e_{gap}$ and the error value $e_{rms}$ based on the point group data (points d5-1 to d5-5 and points d6-1 to d6-8) in the similar manner to that in the case of FIG. 2. For example, in the case of the point group data (points d5-1 to d5-5 and points d6-1 to d6-8) illustrated in FIG. 4, the distance value $e_{gap}$ does not satisfy the condition R1. In the point group data 21c in FIG. 4, missing of a point group occurs in the target 2 formed by the point group data due to the characteristics and the like of the light receiving element of the sensors 10A and 10B.

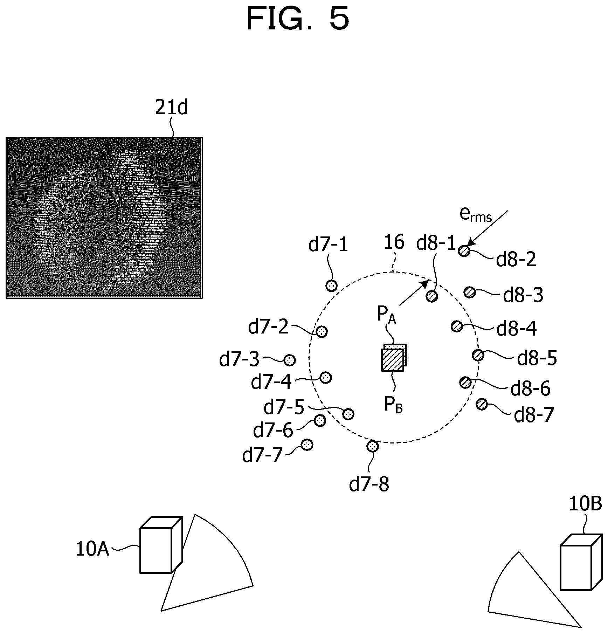

FIG. 5 is a diagram (4) for describing the distance value and the error value. In the example illustrated in FIG. 5, point group data measured by the sensor 10A includes points d7-1 to d7-8. Point group data measured by the sensor 10B includes points d8-1 to d8-7. The points d7-1 to d7-8 and the points d8-1 to d8-7 are points obtained by simplifying a point group data 21d for explanation.

The information processing apparatus 100 calculates the distance value $e_{gap}$ and the error value $e_{rms}$ based on the point group data (points d7-1 to d7-8 and points d8-1 to d8-7) in the similar manner to that in the case of FIG. 2. For example, in the case of the point group data (points d7-1 to d7-8 and points d8-1 to d8-7) illustrated in FIG. 5, the error value $e_{rms}$ does not satisfy the condition R2. In the point group data 21d in FIG. 5, noise occurs in the target 2 formed by the point group data due to the environmental factor and the like.

The information processing apparatus 100 repeatedly executes the processing of calculating the distance value $e_{gap}$ and the error value $e_{rms}$ on the point group data of the target 2 measured by the sensors 10 at each time point.

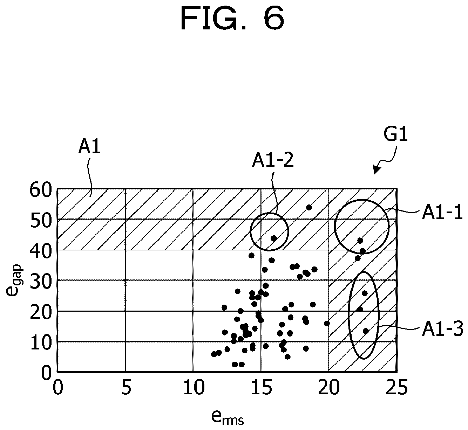

FIG. 6 is a diagram illustrating a relationship between the distance value and the error value in the point group data at each time point. In a graph G1 in FIG. 6, a horizontal axis is an axis corresponding to the error value $e_{rms}$, and a vertical axis is an axis corresponding to the distance value $e_{gap}$. Points illustrated in the graph G1 indicate a relationship between the distance value $e_{gap}$ and the error value $e_{rms}$, which are calculated based on the point group data of the target 2 measured at a certain time point.

A case where the point indicating the relationship between the distance value $e_{gap}$ and the error value $e_{rms}$ is included in a region A1, means that the point group data does not satisfy the condition R1 or the condition R2. For example, in a case where a point is included in a region A1-1, point group data corresponding to this point has target distortion and bonding shift, such as the point group data 21a and the point group data 21b illustrated in FIGs. 2 and 3.

In a case where a point is included in a region A1-2, missing of a point group occurs in point group data corresponding to this point, such as the point group data 21c illustrated in FIG. 4. In a case where a point is included in a region A1-3, noise occurs in point group data corresponding to this point, such as the point group data 21d illustrated in FIG. 5.

The information processing apparatus 100 repeatedly executes processing of updating the external parameter by performing the external calibration with point group data in which the point (point group data) indicating the relationship between the distance value $e_{gap}$ and the error value $e_{rms}$ is not included in the region A1.

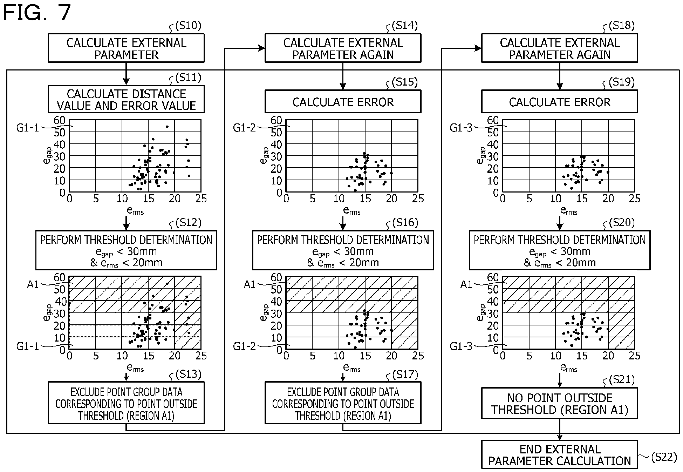

FIG. 7 is a diagram for describing a change of the point group data used when the external parameter is updated. As illustrated in FIG. 7, the information processing apparatus 100 calculates the external parameter (initial value of the external parameter) by using the point group data measured by the sensor 10 (step S10). The information processing apparatus 100 adjusts the position of the point group data at each time point based on the external parameter, and calculates the distance value and the error value (step S11). The relationship between the distance value and the error value of the point group data at each time point is represented in a graph G1-1. A horizontal axis of the graph G1-1 is an axis corresponding to the error value $e_{rms}$, and a vertical axis is an axis corresponding to the distance value $e_{gap}$. The description of the horizontal axis and the vertical axis of graphs G1-2 and G1-3 described later is similar to the description of the horizontal axis and the vertical axis of the graph G1-1.

The information processing apparatus 100 performs threshold determination based on the distance value and the error value of the point group data at each time point (step S12). For example, the threshold $e_{th1}$ is set to 30 mm, and the threshold $e_{th2}$ is set to 20 mm. The information processing apparatus 100 excludes exclusion target point group data corresponding to points outside the threshold (region A1) (step S13).

The information processing apparatus 100 estimates the external parameter again by using the remaining point group data (step S14). The information processing apparatus 100 adjusts the position of the point group data at each time point, based on the updated external parameter, and calculates the distance value and the error value (step S15). The relationship between the distance value and the error value of the point group data at each time point is represented in the graph G1-2.

The information processing apparatus 100 performs threshold determination based on the distance value and the error value of the point group data at each time point (step S16). For example, the threshold $e_{th1}$ is set to 30 mm, and the threshold $e_{th2}$ is set to 20 mm. The information processing apparatus 100 excludes exclusion target point group data corresponding to points outside the threshold (region A1) (step S17).

The information processing apparatus 100 estimates the external parameter again by using the remaining point group data (step S18). The information processing apparatus 100 adjusts the position of the point group data at each time point based on the updated external parameter, and calculates the distance value and the error value (step S19). The relationship between the distance value and the error value of the point group data at each time point is represented in the graph G1-3.

Since there is no point outside the threshold (region A1) (step S21), the information processing apparatus 100 ends the calculation of the external parameter (step S22).

As described above, the information processing apparatus 100 according to the embodiment updates the external parameter by performing the external calibration with the point group data obtained by excluding the exclusion target point group data from the point group data measured by the sensor 10 at each time point. The information processing apparatus adjusts the position of the point group data by using the updated external parameter, and repeatedly executes the above-described processing until the exclusion target point group data is not detected any more. Thus, it is possible to perform the external calibration by using the point group data obtained by excluding the point group data depending on the sensor individual difference, the sensor characteristics, and the environment, and to improve the accuracy of estimating the positional relationship between the plurality of sensors.

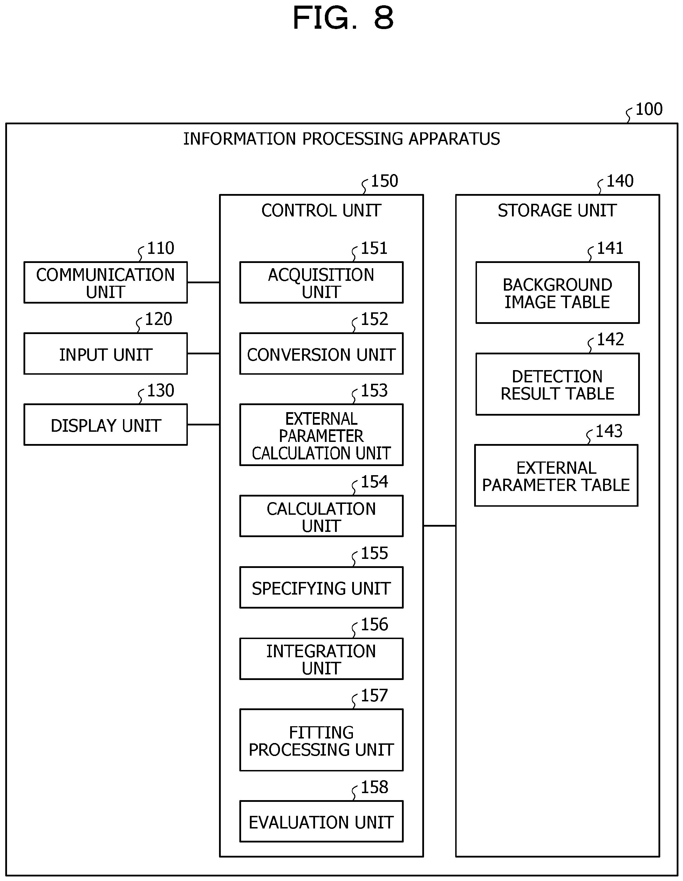

Next, a configuration of the information processing apparatus 100 illustrated in FIG. 1 will be described. FIG. 8 is a functional block diagram illustrating the configuration of the information processing apparatus according to the embodiment. As illustrated in FIG. 8, the information processing apparatus 100 includes a communication unit 110, an input unit 120, a display unit 130, a storage unit 140, and a control unit 150.

The communication unit 110 is a processing unit that receives data of a distance image from the sensor 10 illustrated in FIG. 1. The communication unit 110 outputs the received data of the distance image to the control unit 150. The communication unit 110 is an example of a communication device.

The input unit 120 is an input device that inputs various types of information to the information processing apparatus 100. The input unit 120 corresponds to a keyboard, a mouse, a touch panel, or the like.

The display unit 130 is a display device that displays information output from the control unit 150. For example, the display unit 130 displays skill recognition, scoring results, and the like of various competitions. The display unit 130 corresponds to a liquid crystal display, an organic electro-luminescence (EL) display, a touch panel, or the like.

The storage unit 140 includes a background image table 141, a detection result table 142, and an external parameter table 143. The storage unit 140 corresponds to a semiconductor memory element such as a random-access memory (RAM) or a flash memory, or a storage device such as a hard disk drive (HDD).

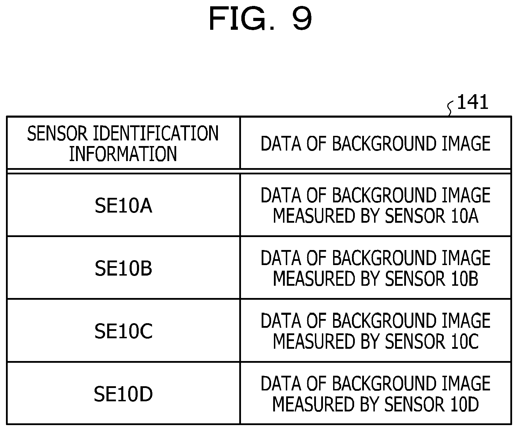

The background image table 141 is a table that stores data of a background image (data of the distance image) measured by each of the sensors 10A to 10D in a state where there is no target 2. FIG. 9 is a diagram illustrating an example of a data structure of the background image table. As illustrated in FIG. 9, in the background image table 141, sensor identification information is associated with the data of the background image. The sensor identification information is information for uniquely identifying the sensor.

For example, sensor identification information "SE10A" indicates the sensor 10A. Sensor identification information "SE10B" indicates the sensor 10B. Sensor identification information "SE10C" indicates the sensor 10C. Sensor identification information "SE10D" indicates the sensor 10D.

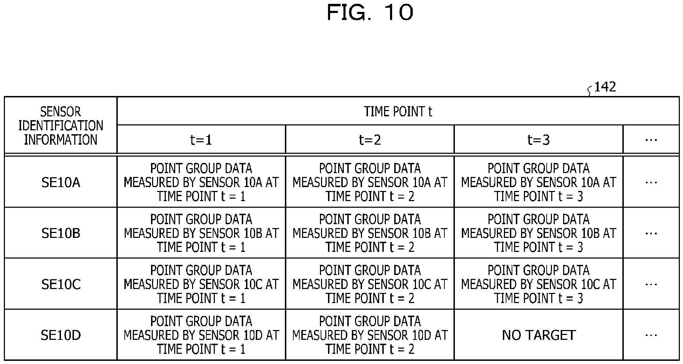

The detection result table 142 is a table that stores the point group and the position of the target 2 detected at each time point, based on the measurement result of the sensor 10. FIG. 10 is a diagram illustrating an example of a data structure of the detection result table. As illustrated in FIG. 10, the detection result table 142 stores the sensor identification information and point group data of the target 2 at each time point. The sensor identification information is information for uniquely identifying the sensor.

The point group data of the target is data indicating a relationship between the point group of the target 2 and the three-dimensional coordinates of a point included in the point group at the corresponding time point t. In a case where no target is detected for the corresponding sensor identification information and time point, "no target" is stored.

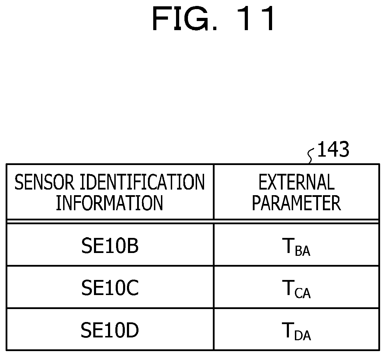

The external parameter table 143 is a table that stores the external parameter calculated by an external parameter calculation unit 153 described later. FIG. 11 is a diagram illustrating an example of a data structure of the external parameter table. As illustrated in FIG. 11, in the external parameter table 143, the sensor identification information is associated with the external parameter. The sensor identification information is information for identifying the sensor 10. The external parameter is data indicating the position and orientation relative to the sensor 10 being the reference. In the embodiment, it is assumed that the sensor being the reference is the sensor 10A.

An external parameter $T_{BA}$ is data indicating the relative position and orientation of the sensor 10B with respect to the sensor 10A being the reference. An external parameter $T_{CA}$ is data indicating the relative position and orientation of the sensor 10C with respect to the sensor 10A being the reference. An external parameter $T_{DA}$ is data indicating the relative position and orientation of the sensor 10D with respect to the sensor 10A being the reference.

Description returns to FIG. 8. The control unit 150 includes an acquisition unit 151, a conversion unit 152, the external parameter calculation unit 153, a calculation unit 154, a specifying unit 155, an integration unit 156, a fitting processing unit 157, and an evaluation unit 158. The control unit 150 is realized by any of a central processing unit (CPU), a microprocessor unit (MPU), a hardwired logic circuit such as an application-specific integrated circuit (ASIC) and a field-programmable gate array (FPGA), or the like.

The acquisition unit 151 is a processing unit that acquires data of the distance image from the sensor 10 via the communication unit 110. The acquisition unit 151 acquires data of the distance image from the sensor 10 in advance in a state where the target 2 is not disposed, and registers the acquired data of the distance image in the background image table 141 as the data of the background image. It is assumed that the acquisition unit 151 registers the sensor identification information and the data of the background image in the background image table 141 in association with each other.

In a case where the external calibration is performed, the acquisition unit 151 acquires data of a plurality of continuous distance images from the sensor 10 and extracts data of the distance image at regular intervals. The user operates the input unit 120 to notify the information processing apparatus that the external calibration is to be performed, and then moves the target 2.

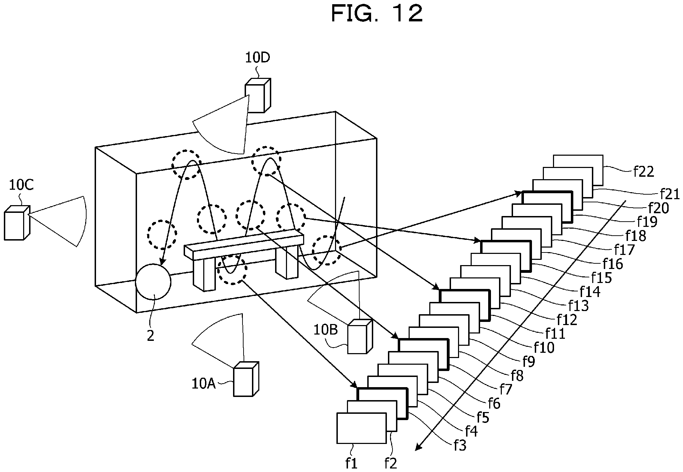

FIG. 12 is a diagram for describing processing of the acquisition unit according to the embodiment. While the user is moving the target 2 along an action region, the sensor 10 measures a plurality of distance images (frames) at a predetermined frame rate (FPS: frames per second) and outputs data of the plurality of distance images in time series to the information processing apparatus 100 (acquisition unit 151). It is assumed that frame numbers are assigned to the data of the plurality of distance images in ascending order, and the frame numbers are synchronized in the sensors 10A to 10D. The frame number is a number for identifying the distance image.

For example, the acquisition unit 151 sequentially acquires data of distance images having frame numbers f1 to f22 from the sensor 10A. In the following description, data of a distance image having a frame number fn (n is a natural number) is referred to as a distance image fn. The acquisition unit 151 extracts distance images f3, f7, f11, f15, and f19 at regular intervals. The acquisition unit 151 extracts distance images f3, f7, f11, f15, and f19 at regular intervals for the sensors 10B to 10D in the similar manner.

The acquisition unit 151 outputs data of the distance images extracted from the sensor 10 at the regular intervals, to the conversion unit 152.

The conversion unit 152 is a processing unit that generates point group data at each time point based on the data of the distance image received from the acquisition unit 151. The conversion unit 152 registers the point group data at each time point in the detection result table 142 in association with the sensor identification information.

The conversion unit 152 obtains a difference between the received data of the distance image and the data of the background image stored in the background image table 141 and generates background difference image data.

It is assumed that the conversion unit 152 stores a conversion table in which a relationship between the position and the distance value of a pixel, and a point and the coordinates in the orthogonal coordinate system are defined. The conversion unit 152 converts pixels corresponding to the target 2, that are included in the background difference image data, into point group data, based on the conversion table.

Processing of the conversion unit 152 in a case where the distance images f3, f7, f11, f15, and f19 are extracted from the data of the plurality of distance images transmitted from the sensor 10A will be described. The conversion unit 152 obtains a difference between the distance image f3 and the data of the background image having the sensor identification information "SE10A", and generates background difference image data at a time point t = 1. The conversion unit 152 generates point group data at the time point t = 1 based on the background difference image at the time point t = 1 and the conversion table. The conversion unit 152 registers the point group data at the time point t = 1 in the detection result table 142 in association with the sensor identification information "SE10A" of the sensor 10A.

The conversion unit 152 repeatedly executes the above-described processing on the other extracted distance image fn to generate point group data at each time point and registers the generated point group data in the detection result table 142.

In a case where the distance images f3, f7, f11, f15, and f19 are extracted from a plurality of pieces of data of distance images from the sensors 10B to 10C, the conversion unit 152 also generates point group data at each time point and registers the point group data in the detection result table 142, in a manner similar to that for the sensor 10A.

The external parameter calculation unit 153 calculates the external parameters $T_{BA}$, $T_{CA}$, and $T_{DA}$ based on the point group data at each time point included in the detection result table 142, and registers the calculated external parameters $T_{BA}$, $T_{CA}$, and $T_{DA}$ in the external parameter table 143. In a case where the external parameters $T_{BA}$, $T_{CA}$, and $T_{DA}$ are already registered in the external parameter table 143, the external parameter calculation unit 153 updates the external parameters $T_{BA}$, $T_{CA}$, and $T_{DA}$ with the newly-calculated external parameters $T_{BA}$, $T_{CA}$, and $T_{DA}$.

The external parameter calculation unit 153 acquires the point group data measured by the sensor 10 at each time point from the detection result table 142, and calculates the external parameters $T_{BA}$, $T_{CA}$, and $T_{DA}$ so that the shape represented by the point group data at each time point is close to the shape of a sphere. The position of a point in the point group data is adjusted in accordance with a change in the external parameters $T_{BA}$, $T_{CA}$, and $T_{DA}$. Any technique may be used for the processing in which the external parameter calculation unit 153 calculates the external parameters by using the point group data at each time point.

In a case where the point group data at each time point is registered in the detection result table 142 by the conversion unit 152, the external parameter calculation unit 153 calculates an initial value of the external parameter. The external parameter calculation unit 153 repeatedly executes the processing of calculating the external parameter and updates the external parameter table 143, each time the exclusion target point group data is excluded from the point group data in the detection result table 142 by the specifying unit 155 described later.

The external parameter calculation unit 153 may adjust the position of the point group data stored in the detection result table 142, based on the external parameters $T_{BA}$, $T_{CA}$, and $T_{DA}$. In a case where the point group data is not excluded any more from the point group data in the detection result table 142, the external parameter calculation unit 153 ends the processing of calculating the external parameter.

The calculation unit 154 is a processing unit that calculates the distance value $e_{gap}$ and the error value $e_{rms}$ described in FIGs. 2 to 5. The calculation unit 154 outputs information of the distance value $e_{gap}$ and the error value $e_{rms}$ calculated from the point group data at each time point, to the specifying unit 155. An example of processing of the calculation unit 154 will be described below.

The calculation unit 154 refers to the detection result table 142, acquires point group data of the sensor 10 corresponding to a time point t = n, and adjusts the position of the point group data based on the external parameters $T_{BA}$, $T_{CA}$, and $T_{DA}$. The calculation unit 154 calculates the distance value based on the point group data subjected to position adjustment.

The processing in which the calculation unit 154 calculates the distance value will be described with reference to FIG. 2. In FIG. 2, description is given using a combination of the sensor 10A and the sensor 10B, but the embodiment is not limited to this combination. The calculation unit 154 calculates the center position $P_A$ of a sphere estimated from the point group data (points d1-1 to d1-6) measured by the sensor 10A. The information processing apparatus 100 calculates a center position $P_B$ of a sphere estimated from the point group data (points d2-1 to d2-6) measured by the sensor 10B. The calculation unit 154 calculates the distance between the center position $P_A$ and the center position $P_B$, as the distance value $e_{gap}$.

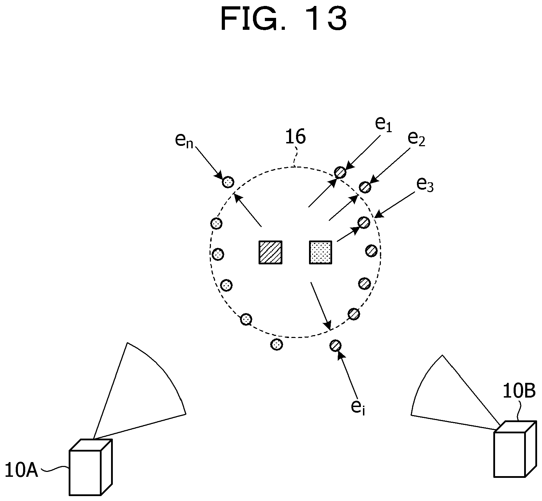

FIG. 13 is a diagram for describing processing in which the calculation unit calculates the error value $e_{rms}$. FIG. 13 illustrates the point group data measured by the sensors 10A and 10B, but the embodiment is not limited to this. The calculation unit 154 calculates the error value $e_{rms}$ based on expression (1). In expression (1), $e_i$ represents a distance from the real spherical surface of the real sphere 16 to a point. The outside of the spherical surface is set to being positive, and the inside of the spherical surface is set to being negative. In expression (1), the root mean square error of $e_1$ to $e_n$ is calculated as the error value $e_{rms}$.

[Expression. 1]

$$e_{rms} = \sqrt{\frac{1}{n}\sum_{i=1}^{n} e_i^2} \qquad \cdots (1)$$

In the example of expression (1), the calculation unit 154 calculates the root mean square error as the error value $e_{rms}$, but the error value $e_{rms}$ is not limited to this. The calculation unit 154 may calculate a mean square error as the error value $e_{rms}$ based on expression (2), or may calculate an absolute value average as the error value $e_{rms}$ based on expression (3).

[Expression. 2]

$$e_{rms} = \frac{1}{n}\sum_{i=1}^{n} e_i^2 \qquad \cdots (2)$$

[Expression. 3]

$$e_{rms} = \frac{1}{n}\sum_{i=1}^{n} |e_i| \qquad \cdots (3)$$

Each time the external parameter stored in the external parameter table 143 is updated, the calculation unit 154 repeatedly executes the processing of calculating the distance value $e_{gap}$ and the error value $e_{rms}$ at each time point, and outputs the distance value $e_{gap}$ and the error value $e_{rms}$ to the specifying unit 155.

The specifying unit 155 is a processing unit that specifies the exclusion target point group data based on the distance value $e_{gap}$ and the error value $e_{rms}$ at each time point. The specifying unit 155 deletes the specified exclusion target point group data from the detection result table 142. An example of processing of the specifying unit 155 will be described below. The remaining point group data obtained by removing the exclusion target point group data from the point group data in the detection result table 142 corresponds to a "target point group".

The specifying unit 155 is a processing unit that specifies the exclusion target point group data based on the distance value $e_{gap}$ and the error value $e_{rms}$ calculated from the point group data at each time point.

In a case where the distance value $e_{gap}$ and the error value $e_{rms}$ calculated from the point group data at the time point t = n satisfy the condition R1 and the condition R2, the specifying unit 155 does not specify the point group data at the time point t = n, as the exclusion target point group data.

In a case where the distance value $e_{gap}$ and the error value $e_{rms}$ calculated from the point group data at the time point t = n do not satisfy the condition R1 or do not satisfy the condition R2, the specifying unit 155 specifies the point group data at the time point t = n, as the exclusion target point group data.

The specifying unit 155 repeatedly executes the above-described processing on the point group data at each time point, to specify the exclusion target point group from the point group data at each time point. The specifying unit 155 excludes the exclusion target point group data from the detection result table 142.

In a case where the specifying unit 155 specifies the exclusion target point group data from the point group data at each time point, the specifying unit 155 notifies the external parameter calculation unit 153 that the exclusion target point group data is included. The specifying unit 155 repeatedly executes the above-described processing each time the new distance value $e_{gap}$ and the new error value $e_{rms}$ calculated from the point group data at each time point are acquired from the calculation unit 154.

Next, the integration unit 156, the fitting processing unit 157, and the evaluation unit 158 will be described. The integration unit 156, the fitting processing unit 157, and the evaluation unit 158 execute processing in a case where the external calibration by the acquisition unit 151, the conversion unit 152, the external parameter calculation unit 153, the calculation unit 154, and the specifying unit 155 ends and the subject starts an action.

The integration unit 156 acquires the point group data corresponding to the sensor 10, from the conversion unit 152. The integration unit 156 adjusts the point group data of the sensors 10B to 10C in accordance with the position and orientation of the sensor 10A. For example, the integration unit 156 aligns the point group data of the sensor 10B with the position and orientation of the sensor 10A by using the external parameter $T_{BA}$. The integration unit 156 aligns the point group data of the sensor 10C with the position and orientation of the sensor 10A by using the external parameter $T_{CA}$. The integration unit 156 aligns the point group data of the sensor 10D with the position and orientation of the sensor 10A by using the external parameter $T_{DA}$. The integration unit 156 acquires each external parameter from the external parameter table 143.

The integration unit 156 integrates the point group data of the sensor 10A and the point group data of the sensors 10B to 10D, that is aligned with the position and orientation of the sensor 10A, and generates one piece of point group data. The integration unit 156 outputs the generated point group data to the fitting processing unit 157.

The integration unit 156 repeatedly executes the above-described processing each time the point group data of the sensors 10A to 10D is acquired from the conversion unit 152.

The fitting processing unit 157 is a processing unit that performs fitting for fitting three-dimensional model data of the subject to the point group data. The fitting processing unit 157 specifies skeleton model data of the subject based on the fitting result. The skeleton model data includes position information of each joint. The fitting processing unit outputs the skeleton model data to the evaluation unit 158. The fitting processing unit repeatedly executes the above-described processing each time the point group data is acquired from the integration unit 156.

The evaluation unit 158 is a processing unit that acquires the skeleton model data in time series and evaluates the action of the subject based on the transition of coordinates of each joint of the skeleton model data. For example, the evaluation unit 158 evaluates the action of the subject by using the transition of the coordinates of each joint and a table (not illustrated) in which the type of the action and the success or failure of establishment of the action are defined. Then, the evaluation unit 158 outputs the evaluation result to the display unit 130 and cause the display unit 130 to display the evaluation result.

The evaluation of the action, that is performed by the evaluation unit 158, is applicable to various scoring competitions. The scoring competitions include, in addition to the gymnastics, a trampoline, a jump in swimming, figure skating, standard moves of karate, ballroom dance, snowboarding, skateboarding, skiing aerial, and surfing. The embodiment may also be applied to a form check or the like for classical ballet, ski-jump, mogul air, turning, baseball, or basketball. The evaluation of the action may also be applied to competitions such as kendo, judo, wrestling, and sumo. The evaluation of the action may also be used to evaluate whether or not the barbell for weight lifting is raised.

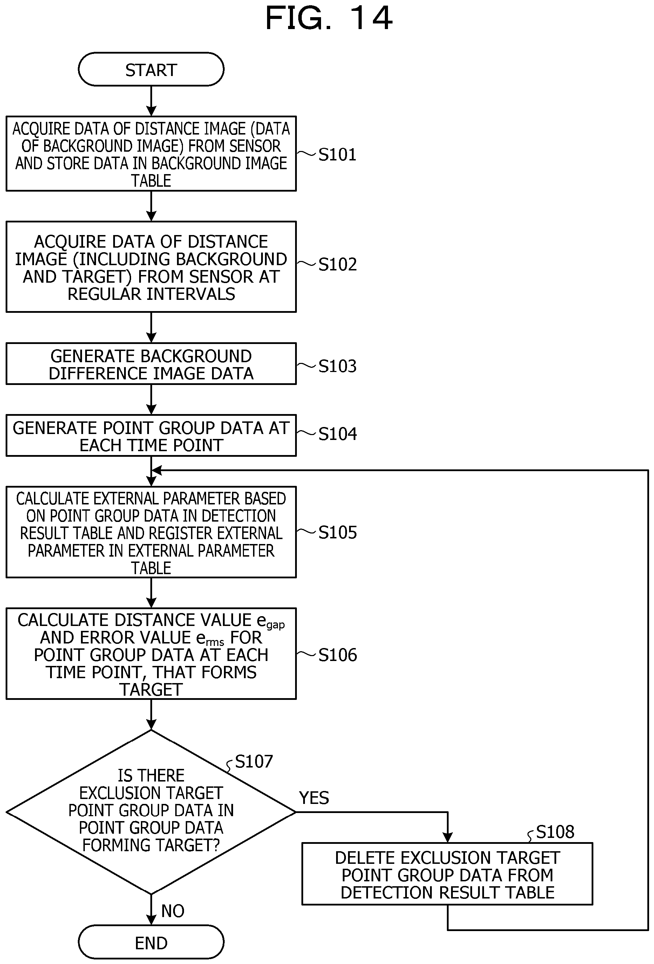

Next, an example of a processing procedure in which the information processing apparatus 100 according to the embodiment performs the external calibration will be described. FIG. 14 is a flowchart illustrating the processing procedure of the processing in which the information processing apparatus according to the embodiment performs external calibration. As illustrated in FIG. 14, the acquisition unit 151 in the information processing apparatus 100 acquires data of the distance image (data of the background image) from the sensor 10 and stores the acquired data of the distance image in the background image table 141 (step S101).

The acquisition unit 151 acquires data of the distance image (including the background and the target) from the sensor 10 at regular intervals (step S102). The conversion unit 152 in the information processing apparatus 100 generates background difference data based on the data of the background image and the data of the distance image (step S103). The conversion unit 152 generates point group data at each time point (step S104).

The external parameter calculation unit 153 in the information processing apparatus 100 calculates the external parameter based on the point group data in the detection result table 142 and registers the external parameter in the external parameter table 143 (step S105).

The calculation unit 154 in the information processing apparatus 100 calculates the distance value $e_{gap}$ and the error value $e_{rms}$ for the point group data at each time point forming the target (step S106). The specifying unit 155 in the information processing apparatus 100 determines whether or not there is the exclusion target point group data in the point group data forming the target (step S107).

In a case where there is the exclusion target point group data in the point group data forming the target (Yes in step S107), the specifying unit 155 deletes the exclusion target point group data from the detection result table (step S108), and causes the process to proceed to step S105.

In a case where there is no exclusion target point group data in the point group data forming the target (No in step S107), the information processing apparatus 100 ends the external calibration.

Next, effects of the information processing apparatus 100 according to the embodiment will be described. The information processing apparatus 100 updates the external parameters by performing the external calibration with the point group data obtained by excluding the exclusion target point group data from the point group data measured by the sensor 10 at each time point. The information processing apparatus 100 adjusts the position of the point group data by using the updated external parameter, and repeatedly executes the above-described processing until the exclusion target point group data is not detected any more. Thus, it is possible to perform the external calibration by using the point group data obtained by excluding the point group data depending on the sensor individual difference, the sensor characteristics, and the environment, and to improve the accuracy of estimating the positional relationship between the plurality of sensors.

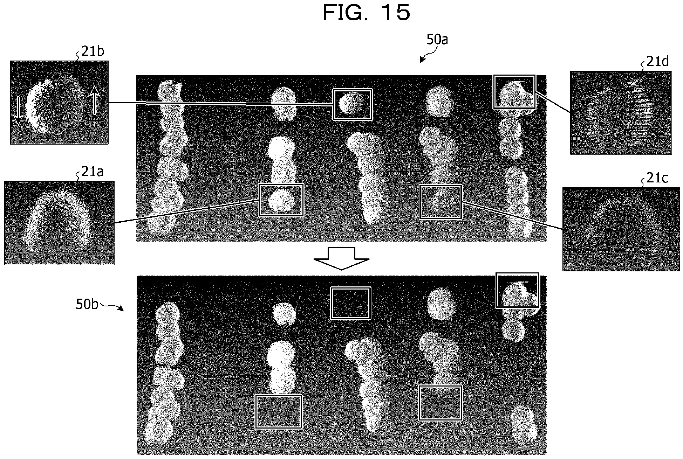

FIG. 15 is a diagram illustrating an example in which the processing of the information processing apparatus is applied to the point group data at each time point. In FIG. 15, the information processing apparatus 100 executes the processing on each piece of point group data 50a, and thus the pieces of the point group data 21a, 21b, and 21c are specified as the exclusion target point group data, and point group data 50b remains. The accuracy of estimating the external parameter is improved by performing the external calibration with the point group data 50b.

In a case where the exclusion target point group data is specified, the information processing apparatus 100 specifies the exclusion target point group data by using both the condition R1 and the condition R2, but the embodiment is not limited to this. The information processing apparatus 100 may calculate only the distance value $e_{gap}$ of the point group data at each time point, determine whether or not the distance value $e_{gap}$ satisfies the condition R1, and specify the point group data that does not satisfy the condition R1, as the exclusion target point group data.

The information processing apparatus 100 may calculate only the error value $e_{rms}$ of the point group data at each time point, determine whether or not the error value $e_{rms}$ satisfies the condition R2, and specify the point group data that does not satisfy the condition R2, as the exclusion target point group data.

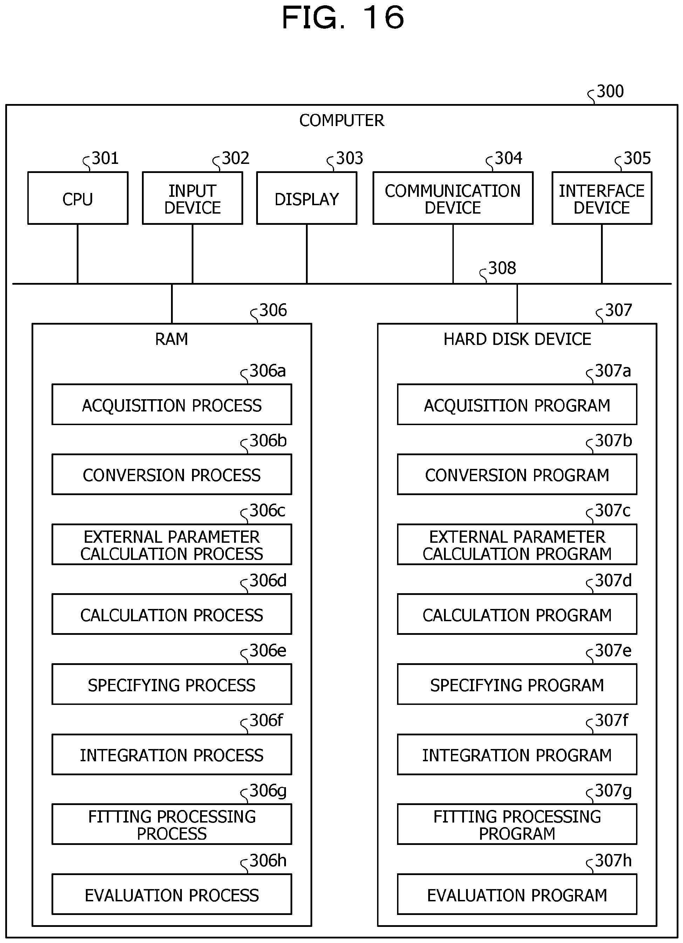

Next, an example of a hardware configuration of a computer that implements functions similar to those of the information processing apparatus 100 described in the above embodiment will be described. FIG. 16 is a diagram illustrating an example of a hardware configuration of a computer that implements functions similar to those of the information processing apparatus.

As illustrated in FIG. 16, a computer 300 includes a CPU 301 that executes various types of arithmetic processing, an input device 302 that receives an input of data from the user, and a display 303. The computer 300 also includes a communication device 304 that receives the data of the distance image from the sensor 10, and an interface device 305 coupled to various devices. The computer 300 includes a RAM 306 that temporarily stores various types of information, and a hard disk device 307. Each of devices (the CPU 301 to the hard disk device 307) is coupled to a bus 308.

The hard disk device 307 includes an acquisition program 307a, a conversion program 307b, an external parameter calculation program 307c, a calculation program 307d, and a specifying program 307e. The hard disk device 307 includes an integration program 307f, a fitting processing program 307g, and an evaluation program 307h. The CPU 301 reads the acquisition program 307a, the conversion program 307b, the external parameter calculation program 307c, the calculation program 307d, the specifying program 307e, the integration program 307f, the fitting processing program 307g, and the evaluation program 307h and loads the programs into the RAM 306.

The acquisition program 307a functions as an acquisition process 306a. The conversion program 307b functions as a conversion process 306b. The external parameter calculation program 307c functions as an external parameter calculation process 306c. The calculation program 307d functions as a calculation process 306d. The specifying program 307e functions as a specifying process 306e. The integration program 307f functions as an integration process 306f. The fitting processing program 307g functions as a fitting processing process 306g. The evaluation program 307h functions as an evaluation process 306h.

Processing of the acquisition process 306a corresponds to the processing of the acquisition unit 151. Processing of the conversion process 306b corresponds to the processing of the conversion unit 152. Processing of the external parameter calculation process 306c corresponds to the processing of the external parameter calculation unit 153. Processing of the calculation process 306d corresponds to the processing of the calculation units 154. Processing of the specifying process 306e corresponds to the processing of the specifying unit 155. Processing of the integration process 306f corresponds to the processing of the integration unit 156. Processing of the fitting processing process 306g corresponds to the processing of the fitting processing unit 157. Processing of the evaluation process 306h corresponds to the processing of the evaluation unit 158.

The acquisition program 307a to the evaluation program 307h do not necessarily have to be stored in the hard disk device 307 from the beginning. For example, the programs may be stored in a "portable physical medium" to be inserted into the computer 300, such as a flexible disk (FD), a compact disc read-only memory (CD-ROM), a digital versatile disc (DVD), a magneto-optical disc, or an IC card. The computer 300 may read and execute the acquisition program 307a to the evaluation program 307h.

**Claims**

1. A calculation method executed by a computer, the method comprising:

    acquiring point groups of a target at each time point, that are measured using a plurality of sensors;
    executing, for each time point, a process of, based on a first point group and a second point group, calculating a first distance value indicating a distance between a center of the first point group and a center of the second point group, and calculating an first error value that indicating a degree of deviation between a surface of a sphere and the first point group and the second point group, the first point group indicating a point group of the target, by which is measured using a first sensor among the plurality of sensors, and the second point group indicating a point group of the target, by which is measured using a second sensor among the plurality of sensors;
    specifying a first exclusion target point group indicating a point group to be excluded, from the point groups of the target for each time point, based on the first distance value and the first error value calculated for each time point; and
    calculating first information indicating a positional relationship between the plurality of sensors by using a first target point group which indicates a point group obtained by excluding the first exclusion target point group from the point groups of the target for each time point.

2. The calculation method according to claim 1, further comprising:

    adjusting a position of the first target point group based on the first information indicating the positional relationship,
    calculating a second distance value based on the first target point group after the adjusted position, and
    calculating a second error value a second error value based on the first target point group after the adjusted position.

3. The calculation method according to claim 2, further comprising:
    specifying a second exclusion target point group indicating a point group to be excluded, from the point group for each time point, based on the second distance value and the second error value calculated for each time point.

4. The calculation method according to claim 3, further comprising:
    calculating a second information indicating a positional relationship by using a second target point group obtained by excluding the second exclusion target point group, from the first target point group.

5. The calculation method according to claim 1, further comprising
    calculating an initial value of the positional relationship based on the point groups of the target for each time point, wherein
    the calculating the first distance value in the process includes calculating the first distance value based on the point groups of the target adjusted based on the initial value for each time point, and
    the calculating the first error value included in the process includes calculating the first error value based on the point groups of the target adjusted based on the initial value for each time point.

6. The calculation method according to claim 1, wherein
    the first error value is calculated as any one of a root mean square error, a mean square error, and an absolute value average, of a first distance between the first point group and a surface of a real sphere and/or a second distance between the second point group and the surface of the real sphere.

7. A calculation program that causes a computer to execute a process, the process comprising:

    acquiring point groups of a target at each time point, that are measured using a plurality of sensors;
    executing, for each time point, a process of, based on a first point group and a second point group, calculating a first distance value indicating a distance between a center of the first point group and a center of the second point group, and calculating an first error value that indicating a degree of deviation between a surface of a sphere and the first point group and the second point group, the first point group indicating a point group of the target, by which is measured using a first sensor among the plurality of sensors, and the second point group indicating a point group of the target, by which is measured using a second sensor among the plurality of sensors;
    specifying a first exclusion target point group indicating a point group to be excluded, from the point groups of the target for each time point, based on the first distance value and the first error value calculated for each time point; and calculating first information indicating a positional relationship between the plurality of sensors by using a first target point group which indicates a point group obtained by excluding the first exclusion target point group from the point groups of the target for each time point.

8. The calculation program according to claim 7, wherein the process further comprising:

adjusting a position of the first target point group based on the first information indicating the positional relationship,
calculating a second distance value based on the first target point group after the adjusted position, and
calculating a second error value a second error value based on the first target point group after the adjusted position.

9. The calculation program according to claim 8, wherein the process further comprising:
specifying a second exclusion target point group indicating a point group to be excluded, from the point group for each time point, based on the second distance value and the second error value calculated for each time point.

10. The calculation program according to claim 9, wherein the process further comprising:
calculating a second information indicating a positional relationship by using a second target point group obtained by excluding the second exclusion target point group, from the first target point group.

11. The calculation program according to claim 7, wherein the process further including:

calculating an initial value of the positional relationship based on the point groups of the target for each time point, wherein
the calculating the first distance value includes calculating the first distance value based on the point groups of the target adjusted based on the initial value for each time point, and
the calculating the first error value includes calculating the first error value based on the point groups of the target adjusted based on the initial value for each time point.

12. The calculation program according to claim 7, wherein
the first error value is calculated as any one of a root mean square error, a mean square error, and an absolute value average, of a first distance between the first point group and a surface of a real sphere and/or a second distance between the second point group and the surface of the real sphere.

13. An information processing apparatus comprising:

an acquiring unit configured to acquire point groups of a target at each time point, that are measured using a plurality of sensors;
a calculation unit configured to execute, for each time point, a process of, based on a first point group and a second point group, calculating a first distance value indicating a distance between a center of the first point group and a center of the second point group, and calculating an first error value that indicating a degree of deviation between a surface of a sphere and the first point group and the second point group, the first point group indicating a point group of the target, by which is measured using a first sensor among the plurality of sensors, and the second point group indicating a point group of the target, by which is measured using a second sensor among the plurality of sensors;
a specifying unit configured to specify a first exclusion target point group indicating a point group to be excluded, from the point groups of the target for each time point, based on the first distance value and the first error value calculated for each time point; and
an external parameter calculation unit configured to calculate first information indicating a positional relationship between the plurality of sensors by using a first target point group which indicates a point group obtained by excluding the first exclusion target point group from the point groups of the target for each time point.

14. The information processing apparatus according to claim 13, wherein
the external parameter calculation unit adjusts a position of the first target point group based on the first information indicating the positional relationship,
the calculation unit calculates a second distance value based on the first target point group after the adjusted position, and
the calculation unit calculates a second error value based on the first target point group after the adjusted position.

15. The information processing apparatus according to claim 14, wherein
the specifying unit specifies a second exclusion target point group indicating a point group to be excluded, from the point group for each time point, based on the second distance value and the second error value calculated for each time point.

# FIG. 1

# FIG. 2

# FIG. 3

# FIG. 4

# FIG. 5

# FIG. 6

## FIG. 7

CALCULATE EXTERNAL PARAMETER (S10)

CALCULATE DISTANCE VALUE AND ERROR VALUE (S11)

G1-1

PERFORM THRESHOLD DETERMINATION
$e_{gap} < 30mm$
& $e_{rms} < 20mm$ (S12)

A1

G1-1

EXCLUDE POINT GROUP DATA CORRESPONDING TO POINT OUTSIDE THRESHOLD (REGION A1) (S13)

CALCULATE EXTERNAL PARAMETER AGAIN (S14)

CALCULATE ERROR (S15)

G1-2

PERFORM THRESHOLD DETERMINATION
$e_{gap} < 30mm$
& $e_{rms} < 20mm$ (S16)

A1

G1-2

EXCLUDE POINT GROUP DATA CORRESPONDING TO POINT OUTSIDE THRESHOLD (REGION A1) (S17)

CALCULATE EXTERNAL PARAMETER AGAIN (S18)

CALCULATE ERROR (S19)

G1-3

PERFORM THRESHOLD DETERMINATION
$e_{gap} < 30mm$
& $e_{rms} < 20mm$ (S20)

A1

G1-3

NO POINT OUTSIDE THRESHOLD (REGION A1) (S21)

END EXTERNAL PARAMETER CALCULATION (S22)

# FIG. 8

⌐100

## INFORMATION PROCESSING APPARATUS

⌐150

### CONTROL UNIT

⌐140

### STORAGE UNIT

⌐110

COMMUNICATION UNIT

⌐151

ACQUISITION UNIT

⌐141

BACKGROUND IMAGE TABLE

⌐120

INPUT UNIT

⌐152

CONVERSION UNIT

⌐142

DETECTION RESULT TABLE

⌐130

DISPLAY UNIT

⌐153

EXTERNAL PARAMETER CALCULATION UNIT

⌐143

EXTERNAL PARAMETER TABLE

⌐154

CALCULATION UNIT

⌐155

SPECIFYING UNIT

⌐156

INTEGRATION UNIT

⌐157

FITTING PROCESSING UNIT

⌐158

EVALUATION UNIT

# FIG. 9

141

| SENSOR IDENTIFICATION INFORMATION | DATA OF BACKGROUND IMAGE |
|---|---|
| SE10A | DATA OF BACKGROUND IMAGE MEASURED BY SENSOR 10A |
| SE10B | DATA OF BACKGROUND IMAGE MEASURED BY SENSOR 10B |
| SE10C | DATA OF BACKGROUND IMAGE MEASURED BY SENSOR 10C |
| SE10D | DATA OF BACKGROUND IMAGE MEASURED BY SENSOR 10D |

# FIG. 10

142

| SENSOR IDENTIFICATION INFORMATION | TIME POINT t | | | |
|---|---|---|---|---|
| | t=1 | t=2 | t=3 | ··· |
| SE10A | POINT GROUP DATA MEASURED BY SENSOR 10A AT TIME POINT t = 1 | POINT GROUP DATA MEASURED BY SENSOR 10A AT TIME POINT t = 2 | POINT GROUP DATA MEASURED BY SENSOR 10A AT TIME POINT t = 3 | ··· |
| SE10B | POINT GROUP DATA MEASURED BY SENSOR 10B AT TIME POINT t = 1 | POINT GROUP DATA MEASURED BY SENSOR 10B AT TIME POINT t = 2 | POINT GROUP DATA MEASURED BY SENSOR 10B AT TIME POINT t = 3 | ··· |
| SE10C | POINT GROUP DATA MEASURED BY SENSOR 10C AT TIME POINT t = 1 | POINT GROUP DATA MEASURED BY SENSOR 10C AT TIME POINT t = 2 | POINT GROUP DATA MEASURED BY SENSOR 10C AT TIME POINT t = 3 | ··· |
| SE10D | POINT GROUP DATA MEASURED BY SENSOR 10D AT TIME POINT t = 1 | POINT GROUP DATA MEASURED BY SENSOR 10D AT TIME POINT t = 2 | NO TARGET | ··· |

# FIG. 11

| SENSOR IDENTIFICATION INFORMATION | EXTERNAL PARAMETER |
|---|---|
| SE10B | $T_{BA}$ |
| SE10C | $T_{CA}$ |
| SE10D | $T_{DA}$ |

143

FIG. 12

# FIG. 13

# FIG. 14

START

ACQUIRE DATA OF DISTANCE IMAGE (DATA OF BACKGROUND IMAGE) FROM SENSOR AND STORE DATA IN BACKGROUND IMAGE TABLE — S101

ACQUIRE DATA OF DISTANCE IMAGE (INCLUDING BACKGROUND AND TARGET) FROM SENSOR AT REGULAR INTERVALS — S102

GENERATE BACKGROUND DIFFERENCE IMAGE DATA — S103

GENERATE POINT GROUP DATA AT EACH TIME POINT — S104

CALCULATE EXTERNAL PARAMETER BASED ON POINT GROUP DATA IN DETECTION RESULT TABLE AND REGISTER EXTERNAL PARAMETER IN EXTERNAL PARAMETER TABLE — S105

CALCULATE DISTANCE VALUE $e_{gap}$ AND ERROR VALUE $e_{rms}$ FOR POINT GROUP DATA AT EACH TIME POINT, THAT FORMS TARGET — S106

S107 — IS THERE EXCLUSION TARGET POINT GROUP DATA IN POINT GROUP DATA FORMING TARGET?

YES → DELETE EXCLUSION TARGET POINT GROUP DATA FROM DETECTION RESULT TABLE — S108

NO

END

# FIG. 15

# FIG. 16

COMPUTER — 300

| 301 | 302 | 303 | 304 | 305 |
|---|---|---|---|---|
| CPU | INPUT DEVICE | DISPLAY | COMMUNICATION DEVICE | INTERFACE DEVICE |

308

**RAM — 306**

- ACQUISITION PROCESS — 306a
- CONVERSION PROCESS — 306b
- EXTERNAL PARAMETER CALCULATION PROCESS — 306c
- CALCULATION PROCESS — 306d
- SPECIFYING PROCESS — 306e
- INTEGRATION PROCESS — 306f
- FITTING PROCESSING PROCESS — 306g
- EVALUATION PROCESS — 306h

**HARD DISK DEVICE — 307**

- ACQUISITION PROGRAM — 307a
- CONVERSION PROGRAM — 307b
- EXTERNAL PARAMETER CALCULATION PROGRAM — 307c
- CALCULATION PROGRAM — 307d
- SPECIFYING PROGRAM — 307e
- INTEGRATION PROGRAM — 307f
- FITTING PROCESSING PROGRAM — 307g
- EVALUATION PROGRAM — 307h

FIG. 17

# FIG. 18

# FIG. 19

FIG. 20

# FIG. 21

FIG. 22

FIG. 23

20a                    20b                    20c                    20d

# FIG. 24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019086476 A